# EUROPEAN PATENT SPECIFICATION

(11) **EP 1 839 545 B1**
(45) Date of publication and mention of the grant of the patent: **22.10.2008**
(21) Application number: 06006777.4
(22) Date of filing: 30.03.2006
(51) Int. Cl.: A47J 42/06, A47J 42/46

(54) **Electric seasoning mill**
Gewürzmühle
Moulin pour assaisonnement

(43) Date of publication of application: 03.10.2007
(73) Proprietor: Duo Yeu Metal Co., Ltd., Tainan Hsien (TW)
(72) Inventor: Wang, Chih-Hung, Tainan Hsien (TW)
(74) Representative: Kador & Partner

(56) References cited:
- EP-A- 0 278 234
- EP-A- 0 876 787

## Description

### BACKGROUND OF THE INVENTION

### 1. Field of the invention

The present invention relates to an electric seasoning mill, more particularly one, which has two milling assemblies, one-way ratchets connected to respective milling assemblies, two holding rooms for containing two kinds of seasonings, a motor with two output shafts connected to respective one-way ratchets, and a control switch for changing the rotational direction of the output shafts; only a currently lower one of the milling assemblies will be actuated to grind the seasoning no matter in which one of both upright and inverted positions the seasoning mill is held.

### 2. Brief Description of the Prior Art

In order to preserve the original taste of various kinds of seasonings, seasonings are usually stored in larger particle sizes, and ground and directly dispensed with seasoning grinders when people want to use them.

A currently existing manual seasoning mill structure includes a hollow main body, a rotary operating member connected to an upper end of the hollow main body, a transmission shaft held in the main body and turnable together with the rotary operating member, an inner toothed part joined to a lower end of the transmission shaft, and an outer toothed part positioned around the inner toothed part and secured to an inner side of the main body. And, seasonings are contained in the hollow main body. Thus, the inner toothed part will turn relative to the outer toothed part to grind seasonings together with the outer toothed part when the operating member is rotated.

However, it takes relatively much time and labor to use the manual seasoning mill, and it is difficult for those people who can't use their hands very dexterously to operate such seasoning mills smoothly. Further, the seasoning mill can contain only one kind of seasoning or one kind of seasoning combination instead of two.

Various electric seasoning grinders are available such as were disclosed in Patent CH675961A5, DE20215609U1, US 4,685,625, and US 3,734,417. The electric grinders include a motor, a grinding mechanism, a transmission shaft connected to both the motor and the grinding mechanism, and a switch for turning on/off the motor, but they aren't very practical because they can contain only one kind of seasoning or one kind of seasoning combination.

Although there are several different dual-use seasoning grinders available to consumers, which have two separate rooms therein for containing two kinds of seasonings, and can grind the two kinds of seasonings separately, such as were disclosed in Patents/applications US2003/052207 A1, EP0876787A, W084/00484A, and GB256378A, they are hand-operated, not convenient to use.

Document EP-A-278234 discloses an electric seasoning mill having two separate holding rooms.

### SUMMARY OF THE INVENTION

It is a main object of the invention to provide an improvement on an electric seasoning mill to overcome the above-mentioned problems.

The electric seasoning mill of the present invention includes a main body, a motor, a power supply, a control switch, two transmission shafts, and first and second milling assemblies. The main body has a holding room in each of two ends thereof, and the motor is held in a connecting section between the holding rooms of the main body. The motor has first and second output shafts at two ends, which will always rotate in the same direction, and are each connected to a reduction gear set and an one-way ratchet. The control switch is used for controlling supply of power from the power supply to the motor as well as for changing rotational direction of the output shafts. The milling assemblies are held in respective ones of the holding rooms, and each includes an inner toothed part, and a toothed part positioned around the inner toothed part and secured to the main body. Each of the transmission shafts is connected to one of the one-way ratchets and one of the turning toothed parts such that it will turn with the one-way ratchet only when the one-way ratchet is turned in a certain predetermined direction.

### BRIEF DESCRIPTION OF THE DRAWINGS

The present invention will be better understood by referring to the accompanying drawings, wherein:
Fig. 1 is an exploded perspective view of the present invention,
Fig. 2 is a perspective sectional view of the present invention,
Fig. 3 is a front view of the present invention,
Fig. 4 is a top view of the present invention,
Fig. 5 is a side view of the present invention,
Fig. 6 is a partial side view of the present invention,
Fig. 7 is a partial top view of the present invention,
Fig. 8 is a simplified circuit diagram of the present invention, and
Fig. 9 is a top view of the locking knob of the present invention.

### DETAILED DESCRIPTION OF THE PREFERRED EMBODIMENTS

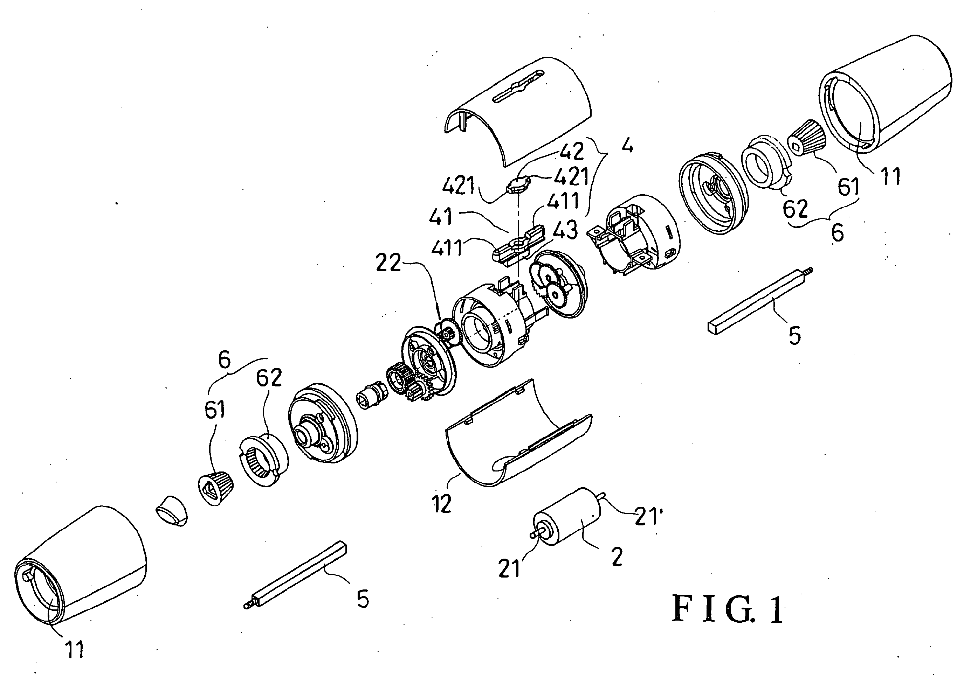

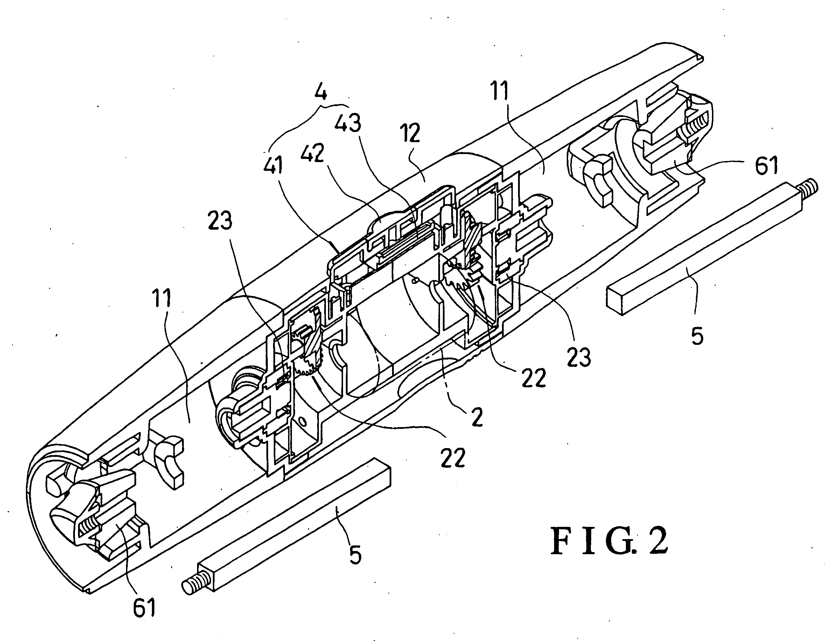

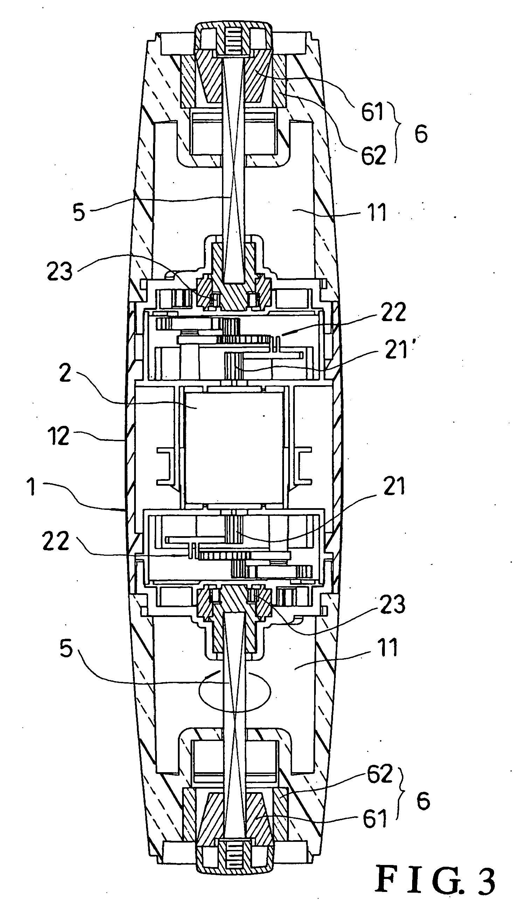

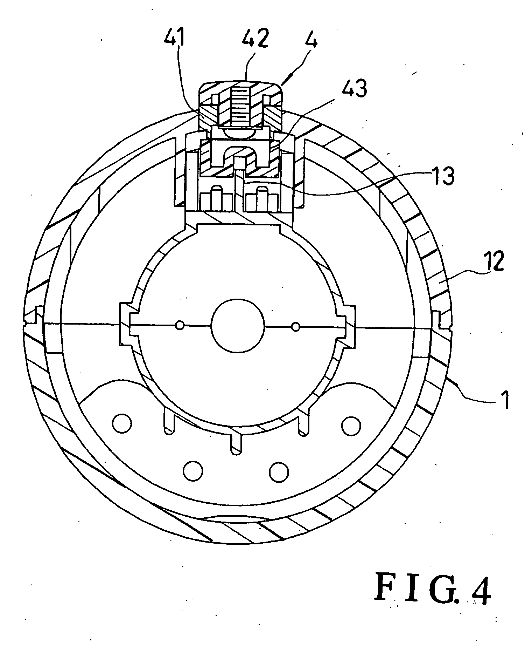

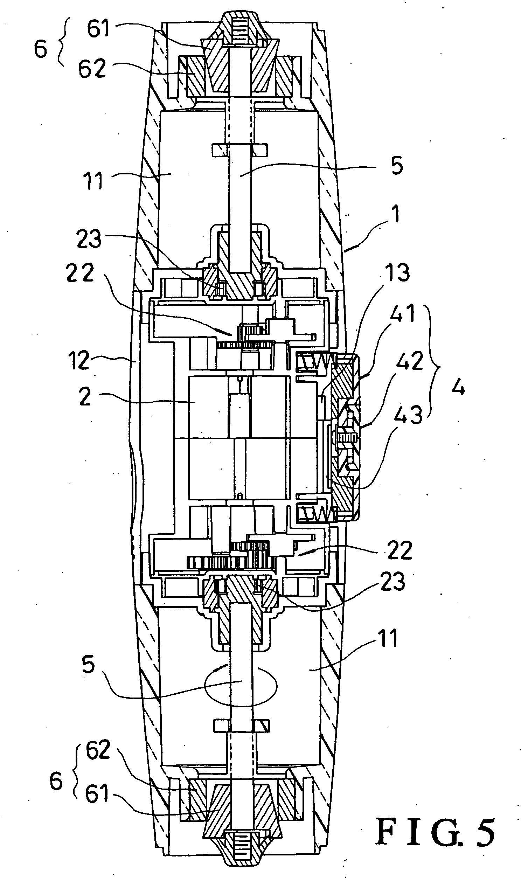

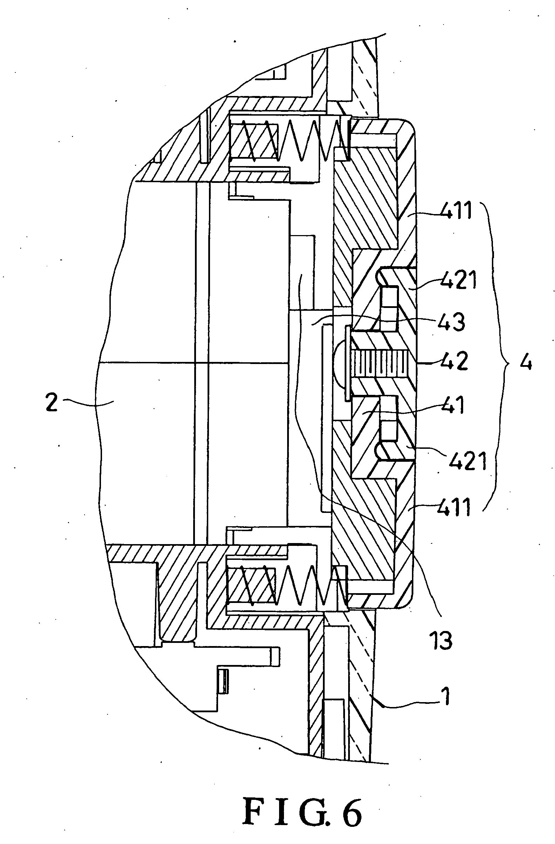

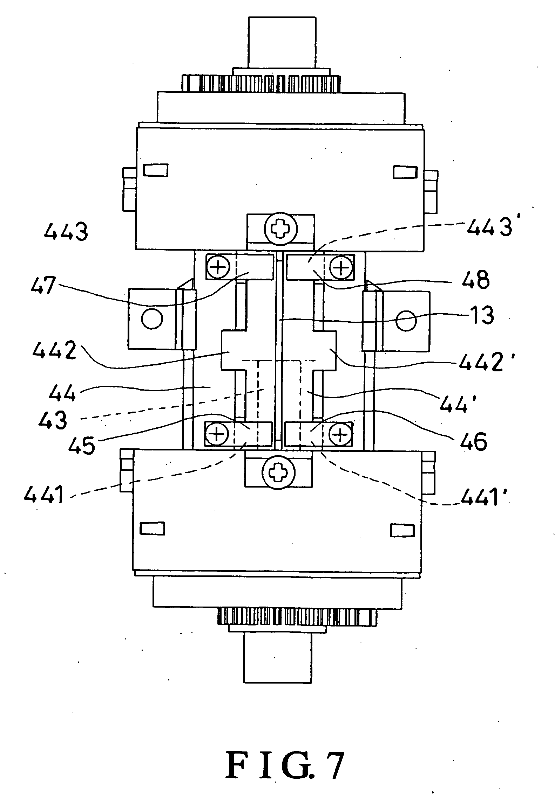

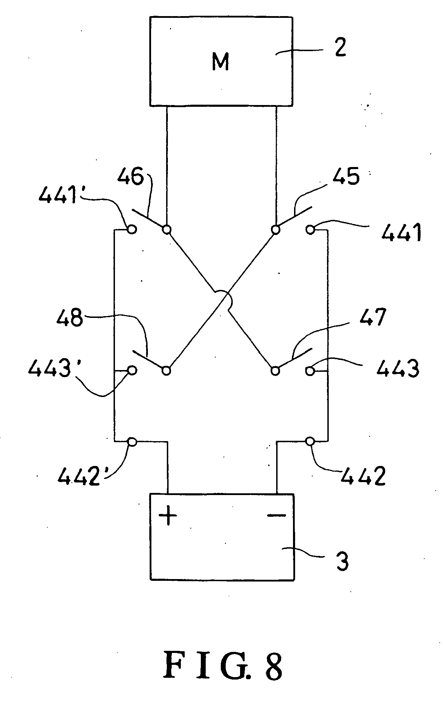

Referring to Figs. 1 to 8, a preferred embodiment of an electric seasoning mill in the present invention includes a main body 1, a motor 2, a power supply unit 3, a control switch 4, two transmission shafts 5, and first and second milling assemblies 6.

The main body 1 has a holding room 11 in each of two ends thereof for containing seasonings; further, the main body 1 has a connecting section 12 between the holding rooms 11, and a longitudinal guiding rail 13 therein.

The motor 2 is held in the connecting section 12 of the main body 1; the motor 2 has first and second output shafts 21 and 21' at two ends thereof; when the motor 2 is activated, the first and the second output shafts 21 and 21' will always rotate in a same direction, and rotational direction of the output shafts 21 and 21' can be changed; in other words, the output shafts 21 and 21' can rotate in a forward direction and they can rotate in a reverse direction; the output shafts 21 and 21' are each connected to a reduction gear set 22, and the reduction gear sets 22 are each connected to an one-way ratchet 23 at an output parts thereof.

The power supply unit 3 is held in the connecting section 12 of the main body 1 for supplying power to the motor 2.

The control switch 4 is fitted to the connecting section 12 of the main body 1 for controlling supply of power from the power supply unit 3 to the motor 2 as well as for changing the rotational direction of the output shafts 21 and 21' of the motor 2; the control switch 4 includes a button 41, a locking knob 42, a sliding block 43, first and second electricity conducting plates 44 and 44', and first, second, third, and fourth acting plates 45, 46, 47, and 48; the button 41 has first and second pressing portions 411 at two ends thereof, which protrudes outside through a wall of the connecting section 12 of the main body 1; the locking knob 42 has two wing portions 421, and it is positioned between the two pressing portions 411 of the button 41, and can be turned so as to be perpendicular to both the pressing portions 411 for locking the button 41, thus preventing the button 41 from being depressed; the button 41 will unlock when the locking knob 42 is parallel to both the pressing portions 411 of the button 41; the sliding block 43 is positioned next to an inner side of the button 41, and fitted on the guiding rail 13 such that the sliding block 43 will slide along the guiding rail 13 when the main body 1 is held with one end thereof being right above the other.

The first electricity conducting plate 44 has a contact point (a) 441, a contact point (b) 442, and a contact point (c) 443 while the second electricity conducting plate 44' has a contact point (a) 441', a contact point (b) 442', and a contact point (c) 443'; the contact point (b) 442 is connected to a negative pole of the power supply unit 3 while the contact point (b) 442' is connected to a positive pole of the power supply unit 3; the first acting plate 45 is constantly connected to both the motor 2 and the fourth acting plate 48, and the second acting plate 46 is constantly connected to both the motor 2 and the third acting plate 47, and the wires connecting both the acting plates 45 and 48 cross, and are off the wires connecting both the acting plates 46 and 47; the first acting plate 45 is off and movable to touch the contact point (a) 441 of the first electricity conducting plate 44, and the second acting plate 46 is off and movable to touch the contact point (a) 441' of the second electricity conducting plate 44', and the third acting plate 47 is off and movable to touch the contact point (c) 443, and the fourth acting plate 48 is off and movable to touch the contact point (c) 443' under a normal condition, in which neither of the pressing portions 411 of the button 41 is depressed.

When the sliding block 43 is near to the inner side of the first pressing portion 411 of the button 41, and the first pressing portion 411 is pressed, the sliding block 43 will press the acting plates 45 and 46 to make the acting plates 45 and 46 get into contact with the contact points (a) 441 and 441' respectively, and the motor 2 will be activated to rotate in a first direction; the motor 2 won't be activated when the second pressing portion 411 of the button 41 is pressed.

On the other hand, when the sliding block 43 is near to the inner side of the second pressing portion 411 of the button 41, and the second pressing portion 411 is pressed, the sliding block 43 will press the acting plates 47 and 48 to make the acting plates 47 and 48 get into contact with the contact points (c) 443 and 443' respectively, and the motor 2 will be activated to rotate in a reverse direction opposite to the first one.

The first and the second milling assemblies 6 are held in respective ones of the holding rooms 11 of the main body 1, positioned near to the openings of the holding rooms 11; each of the milling assemblies 6 includes an inner toothed part 61, and an outer toothed part 62, which is positioned around the inner toothed part 61 and secured to the main body 1, near to the opening of the corresponding holding room 11.

The transmission shafts 5 are each held in a respective one of the holding rooms 11, and connected to a respective one of the one-way ratchets 23 at one end such that it will be turned with the one-way ratchet 23 only when the one-way ratchet 23 is turned in a certain predetermined direction; further, the transmission shafts 5 are each connected to a respective one of the inner toothed parts 61 of the milling assemblies 6 at the other end.

Therefore, when the seasoning mill of the present invention is held with the first output shaft 21 and the corresponding first milling assembly 6 being right under the second output shaft 21' and the second output shaft's corresponding second milling assembly 6 so as to allow the sliding block 43 to slide down along the guiding rail 13 owing to gravity, and when a currently lower one of the pressing portions 411 of the button 41 is pressed, the acting plates 45 and 46 will get into contact with the contact points (a) 441 and 441' respectively, and the motor 2 will start rotating in the first direction for allowing the one-way ratchet 23 connected to the first output shaft 21 to rotate and cause the corresponding transmission shaft 5 to rotate together with it; thus, the inner toothed part 61 of the first milling assembly 6, which is currently in the lower position, will rotate to grind seasonings together with the outer toothed part 62. On the other hand, the one-way ratchet 23 connected to the second output shaft 21' (currently in the upper position) will rotate, but it won't cause the corresponding transmission shaft 5 to rotate together with it; thus, the second milling assembly 6 (currently in the upper position) won't work. The sliding block 43 will be off the acting plates 45 and 46, and the motor 2 will stop rotating when the user stops pressing the button 41. And, because the sliding block 43 has slid down along the guiding rail 13 to be apart from the second pressing portion 411 of the button 41, the motor 2 won't be activated when the mill is held in the above-mentioned position, and the second pressing portion 411 is pressed.

When the seasoning mill is held in an inverted position, in which position the second output shaft 21' and the corresponding second milling assembly 6 are right under the first output shaft 21 so as to allow the sliding block 43 to slide down along the guiding rail 13 owing to gravity, and when a currently lower one of the pressing portions 411 of the button 41 is pressed, the acting plates 47 and 48 will get into contact with the contact points (c) 443 and 443' respectively, and the motor 2 will start rotating in the reverse direction opposite to the first one for allowing the one-way ratchet 23 connected to the second output shaft 21' to rotate and cause the corresponding transmission shaft 5 to rotate together with it; thus, the inner toothed part 61 of the second milling assembly 6 (currently in the lower position) will rotate to grind seasonings together with the outer toothed part 62. On the other hand, the one-way ratchet 23 connected to the first output shaft 21 (currently in the upper position) will rotate, but it can't cause the corresponding transmission shaft 5 to rotate together with it; thus, the first milling assembly 6 (currently in the upper position) won't work. The sliding block 43 will be off the acting plates 47 and 48, and the motor 2 will stop rotating when the user stops pressing the button 41. And, the motor 2 won't be activated when the first pressing portion 411 of the button 41 is pressed with the mill being held in the above-mentioned position.

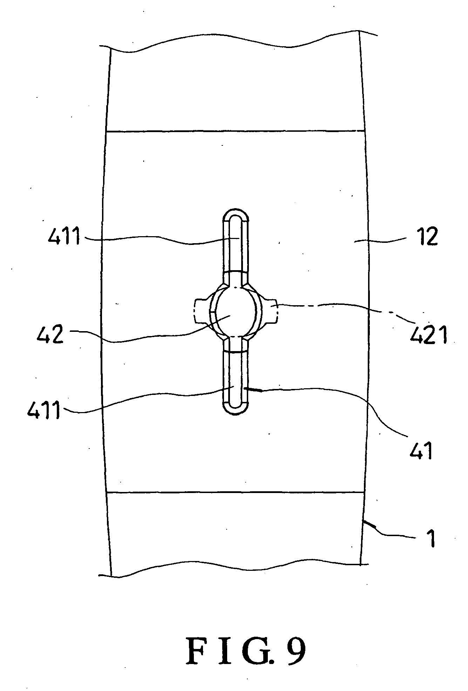

Furthermore, when the locking knob 42 is turned to such a position that the wing portions 421 are perpendicular to the pressing portions 411 of the button 41, and right on an outer side of the main body 1, as shown in Fig. 9, the locking knob 42 will prevent the button 41 from being depressed, thus preventing the motor 2 from being accidentally activated.

From the above description, it can be easily seen that the electric seasoning mill of the present invention has two milling assemblies and two holding rooms for containing two kinds of seasonings or two kinds of seasoning combinations, and only a currently lower one of the milling assemblies will work to grind seasonings contained in the currently lower holding room no matter in which one of the upright and the inverted positions the seasoning mill is held. Therefore, the present invention is relatively convenient to use. Furthermore, the electric seasoning mill of the present invention can be prevented from being accidentally activated by means of turning the locking knob to such a position as to lock the button of the control switch therefore the present invention is relatively safe to use.

## Claims

1. An electric seasoning mill, comprising
a main body (1); said main body having two holding rooms (11);
a motor (2) held in said main body; said motor having first and second output shafts (21,21') at two ends thereof;
a power supply (3) unit used for supplying power to said motor;
at least one control switch (4) used for controlling supply of power from said power supply (3) unit to said motor (2) as well as changing rotational direction of both said first and said second output shafts of said motor; and
first and second milling assemblies (6), said milling assemblies being held in respective ones of said holding rooms (11) of said main body, and connected to respective ones of said output shafts (21,21') of said motor.

2. The electric seasoning mill as claimed in claim 1, wherein said main body has a connecting section (12) between said two holding rooms thereof.

3. The electric seasoning mill as claimed in claim 2, wherein said motor is held in said connecting section of said main body.

4. The electric seasoning mill as claimed in claim 2, wherein said power supply unit is held in said connecting section of said main body.

5. The electric seasoning mill as claimed in claim 2, wherein said control switch is fitted to said connecting section of said main body.

6. The electric seasoning mill as claimed in claim 1, wherein said two output shafts of said motor are connected to said milling assemblies through reduction gear sets.

7. The electric seasoning mill as claimed in claim 6, wherein said reduction gear sets are connected to transmission shafts at output part thereof, and said transmission shafts are connected to said milling assemblies.

8. The electric seasoning mill as claimed in claim 7, wherein said first and second milling assemblies are near to respective ones of openings of said holding rooms of said main body, and each include an inner toothed part, and an outer toothed part positioned around said inner toothed part; said inner toothed parts being joined to respective ones of said transmission shafts; said outer toothed parts being secured near to said openings of said holding rooms of said main body.

9. The electric seasoning mill as claimed in claim 6, wherein an one-way ratchet is connected to each one of said output parts of said reduction gear sets as well as one of said transmission shafts such that said transmission shafts will be rotated only when said one-way ratchets are rotated in their forward directions.

10. The electric seasoning mill as claimed in claim 1, wherein said main body has a connecting section between said two holding rooms thereof, and said control switch includes a button, first and second conducting plates, and first, second, third, and fourth acting plates; said button having first and second pressing portions at two ends thereof, which protrudes outside through a wall of said connecting section of said main body; each of said first and said second conducting plates having first, second and third contact points; said second contact points being respectively connected to positive and negative poles of said power supply unit; said first acting plate being connected to both said motor and said fourth acting plate; said second acting plate being connected to both said motor and said third acting plate; first wires connecting both said first and said fourth acting plates; second wires connecting both said second and said third acting plates as well as crossing and being off said first wires connecting both said first and said fourth acting plates; when said pressing portions of said button aren't depressed, said button being normally in an off position with said first acting plate being off said first contact point of said first conducting plate, said second acting plate being off said first contact point of said second conducting plate, said third acting plate being off said third contact point of said first conducting plate, and with said fourth acting plate being off said third contact point of said second conducting plate; said first and said second acting plates being movable to touch said first contact point of said first conducting plate, and said first contact point of said second conducting plate respectively by means of pressing one of said pressing portions of said button; said third and said fourth acting plates being movable to touch said third contact point of said first conducting plate, and said third contact point of said second conducting plate respectively by means of pressing other one of said pressing portions of said button.

11. The electric seasoning mill as claimed in claim 10, wherein said control switch further has a locking knob, which has two wing portions, and which is positioned between said two pressing portions of said button; said locking knob being turnable to a first position, in which position it is perpendicular to said pressing portions of said button; said locking knob being turnable to a second position, in which position it is parallel to said pressing portions of said button; said button being prevented from being depressed when said locking knob is turned to one of said two positions; said button being depressible when said locking knob is turned to other one of said two positions.

12. The electric seasoning mill as claimed in claim 11, wherein said control switch further has a sliding block next to said button, which sliding block is used for causing depressed movement of said acting plates when said button is pressed, and said main body further has a guiding rail therein for guiding movement of said sliding block.

13. The electric seasoning mill as claimed in claim 10, wherein said control switch further has a sliding block next to said button, which sliding block is used for causing depressed movement of said acting plates when said button is pressed, and said main body further has a guiding rail therein for guiding movement of said sliding block.

## Patentansprüche

1. Elektrische Gewürzmühle, die umfasst:
einen Hauptkörper (1); wobei der Hauptkörper zwei Unterstützungsräume (11) besitzt;
einen Motor (2), der in dem Hauptkörper unterstützt ist; wobei der Motor an seinen zwei Enden eine erste bzw. eine zweite Abtriebswelle (21, 21') besitzt;
eine Stromversorgungseinheit (3), die verwendet wird, um den Motor mit Strom zu versorgen;
wenigstens einen Steuerschalter (4), der verwendet wird, um die Stromversorgung von der Stromversorgungseinheit (3) zu dem Motor (2) und die Änderung der Drehrichtung sowohl der ersten als auch der zweiten Abtriebswelle des Motors zu steuern; und
eine erste und eine zweite Mahlanordnung (6), wobei die Mahlanordnungen jeweils in einem der Unterstützungsräume (11) des Hauptkörpers unterstützt sind und jeweils mit einer entsprechenden Abtriebswelle (21, 21') des Motors verbunden sind.

2. Elektrische Gewürzmühle nach Anspruch 1, wobei der Hauptkörper zwischen seinen zwei Unterstützungsräumen einen Verbindungsabschnitt (12) besitzt.

3. Elektrische Gewürzmühle nach Anspruch 2, wobei der Motor in dem Verbindungsabschnitt des Hauptkörpers unterstützt ist.

4. Elektrische Gewürzmühle nach Anspruch 2, wobei die Stromversorgungseinheit in dem Verbindungsabschnitt des Hauptkörpers unterstützt ist.

5. Elektrische Gewürzmühle nach Anspruch 2, wobei der Steuerschalter an dem Verbindungsabschnitt des Hauptkörpers angebracht ist.

6. Elektrische Gewürzmühle nach Anspruch 1, wobei die zwei Abtriebswellen des Motors mit den Mahlanordnungen über Untersetzungsgetriebe verbunden sind.

7. Elektrische Gewürzmühle nach Anspruch 6, wobei die Untersetzungsgetriebe an einem Ausgangsabschnitt mit Kraftübertragungswellen verbunden sind, wobei die Kraftübertragungswellen mit den Mahlanordnungen verbunden sind.

8. Elektrische Gewürzmühle nach Anspruch 7, wobei sich die erste und die zweite Mahlanordnung in der Nähe entsprechender Öffnungen der Unterstützungsräume des Hauptkörpers befinden und jede von ihnen einen inneren gezahnten Abschnitt und einen äußeren gezahnten Abschnitt, der um den inneren gezahnten Abschnitt angeordnet ist, besitzt; wobei die inneren gezahnten Abschnitte mit entsprechenden Kraftübertragungswellen verbunden sind; und die äußeren gezahnten Abschnitte in der Nähe der Öffnungen der Unterstützungsräume des Hauptkörpers befestigt sind.

9. Elektrische Gewürzmühle nach Anspruch 6, wobei mit jedem der Ausgangsabschnitte der Untersetzungsgetriebe sowie mit einer der Kraftübertragungswellen eine Einweg-Sperrklinke verbunden ist, so dass die Kraftübertragungswellen nur gedreht werden können, wenn die Einweg-Sperrklinken in ihren Vorwärtsrichtungen gedreht werden.

10. Elektrische Gewürzmühle nach Anspruch 1, wobei der Hauptkörper einen Verbindungsabschnitt zwischen den zwei Unterstützungsräumen besitzt und der Steuerschalter einen Druckknopf, eine erste und eine zweite leitende Platte sowie eine erste, eine zweite, eine dritte und eine vierte Betätigungsplatte enthält; wobei der Druckknopf an seinen beiden Enden einen ersten bzw. einen zweiten Druckabschnitt besitzt und durch eine Wand des Verbindungsabschnitts des Hauptkörpers nach außen vorsteht, wobei sowohl die erste als auch die zweite leitende Platte einen ersten, einen zweiten und einen dritten Kontaktpunkt besitzt; wobei die zweiten Kontaktpunkte mit einem positiven bzw. negativen Pol der Stromversorgungseinheit verbunden sind; wobei die erste Betätigungsplatte sowohl mit dem Motor als auch mit der vierten Betätigungsplatte verbunden ist; wobei die zweite Betätigungsplatte sowohl mit dem Motor als auch mit der dritten Betätigungsplatte verbunden ist; wobei erste Drähte die erste und die vierte Betätigungsplatte verbinden; wobei zweite Drähte die zweite und dritte Betätigungsplatte verbinden und die ersten Drähte, die die erste und die vierte Betätigungsplatte verbinden, kreuzen und hierzu versetzt sind; wobei der Druckknopf dann, wenn die Druckabschnitte des Knopfs nicht niedergedrückt sind, normalerweise in einer ausgeschalteten Stellung ist, in der die erste Betätigungsplatte von dem ersten Kontaktpunkt der ersten leitenden Platte getrennt ist, die zweite Betätigungsplatte vom ersten Kontaktpunkt der zweiten leitenden Platte getrennt ist, die dritte Betätigungsplatte vom dritten Kontaktpunkt der ersten leitenden Platte getrennt ist und die vierte Betätigungsplatte von dem dritten Kontaktpunkt der zweiten leitenden Platte getrennt ist; wobei die erste und die zweite Betätigungsplatte in der Weise beweglich sind, dass sie den ersten Kontaktpunkt der ersten leitenden Platte bzw. den ersten Kontaktpunkt der zweiten leitenden Platte durch Drücken auf einen der Druckabschnitte des Druckknopfs berühren; wobei die dritte und die vierte Betätigungsplatte in der Weise beweglich sind, dass sie den dritten Kontaktpunkt der ersten leitenden Platte bzw. den dritten Kontaktpunkt der zweiten leitenden Platte durch Drücken auf den anderen Druckabschnitt des Druckknopfs berühren.

11. Elektrische Gewürzmühle nach Anspruch 10, wobei der Steuerschalter einen Verriegelungsknopf besitzt, der zwei Flügelabschnitte besitzt und zwischen den zwei Druckabschnitten des Druckknopfs positioniert ist; wobei der Verriegelungsknopf in eine erste Position drehbar ist, in der er zu den Druckabschnitten des Druckknopfs senkrecht ist; wobei der Verriegelungsknopf in eine zweite Position drehbar ist, in der er zu den Druckabschnitten des Knopfs parallel ist; wobei ein Niederdrücken des Druckknopfs verhindert wird, wenn der Verriegelungsknopf in eine der zwei Positionen gedreht ist; wobei der Druckknopf niedergedrückt werden kann, wenn der Verriegelungsknopf in die andere der zwei Positionen gedreht ist.

12. Elektrische Gewürzmühle nach Anspruch 11, wobei der Steuerschalter ferner in der Nähe des Druckknopfs einen Gleitblock besitzt, der dazu verwendet wird, die Niederdrückungsbewegung der Betätigungsplatten zu veranlassen, wenn auf den Druckknopf gedrückt wird, und der Hauptkörper ferner eine Führungsschiene besitzt, um die Bewegung des Gleitblocks zu führen.

13. Elektrische Gewürzmühle nach Anspruch 10, wobei der Steuerschalter ferner in der Nähe des Druckknopfs einen Gleitblock besitzt, der dazu verwendet wird, eine Niederdrückungsbewegung der Betätigungsplatten zu veranlassen, wenn auf den Druckknopf gedrückt wird, und der Hauptkörper ferner eine Führungsschiene besitzt, um die Bewegung des Gleitblocks zu führen.

## Revendications

1. Moulin électrique pour assaisonnements, comprenant :
un corps principal (1); ledit corps principal comportant deux chambres (11) de maintien ;
un moteur (2) contenu dans ledit corps principal ; ledit moteur comportant un premier et deuxième arbres (21, 21') de sortie à ses deux extrémités ;
une unité d'alimentation (3) utilisée pour fournir de l'énergie audit moteur ;
au moins un commutateur (4) de commande utilisé pour commander l'apport d'énergie à partir de ladite unité d'alimentation (3) vers ledit moteur (2), ainsi que le changement de sens de rotation desdits premier et deuxième arbres de sortie dudit moteur ; et
un premier et deuxième ensembles de broyage (6), lesdits ensembles de broyage étant maintenus dans les chambres respectives (11) de maintien dudit corps principal, et reliés aux arbres respectifs (21, 21 ') de sortie dudit moteur.

2. Moulin électrique pour assaisonnements selon la revendication 1, dans lequel ledit corps principal comporte une section de connexion (12) située entre lesdites deux chambres de maintien de celui-ci.

3. Moulin électrique pour assaisonnements selon la revendication 2, dans lequel ledit moteur est maintenu dans ladite section de connexion dudit corps principal.

4. Moulin électrique pour assaisonnements selon la revendication 2, dans lequel ladite unité d'alimentation est maintenue dans ladite section de connexion dudit corps principal.

5. Moulin électrique pour assaisonnements selon la revendication 2, dans lequel ledit commutateur de commande est raccordé à ladite section de connexion dudit corps principal.

6. Moulin électrique pour assaisonnements selon la revendication 1, dans lequel lesdits deux arbres de sortie dudit moteur sont reliés auxdits ensembles de broyage par le biais d'engrenages de réduction.

7. Moulin électrique pour assaisonnements selon la revendication 6, dans lequel lesdits engrenages de réduction sont reliés aux arbres de transmission au niveau de leur partie de sortie, et où lesdits arbres de transmission sont reliés auxdits ensembles de broyage.

8. Moulin électrique pour assaisonnements selon la revendication 7, dans lequel lesdits premier et deuxième ensembles de broyage sont proches d'ouvertures respectives desdites chambres de maintien dudit corps, et où chacun comprend une partie dentée interne et une partie dentée externe placée autour de ladite partie dentée interne ; lesdites parties dentées internes rejoignant les arbres respectifs desdits arbres de transmission ; lesdites parties dentées externes étant fixées à proximité desdites ouvertures des dites chambres de maintien dudit corps principal.

9. Moulin électrique pour assaisonnements selon la revendication 6, dans lequel un rochet est relié à chacune desdites parties de sortie desdits engrenages de réduction ainsi qu'à un desdits arbres de transmission, si bien que lesdits arbres de transmission ne peuvent tourner que quand lesdits rochets tournent dans leur sens d'avancée.

10. Moulin électrique pour assaisonnements selon la revendication 1, dans lequel ledit corps principal comporte une section de connexion située entre lesdites deux chambres de maintien de celui-ci, et où ledit commutateur de commande comprend un bouton, une première et deuxième plaques conductrices et une première, deuxième, troisième et quatrième plaques d'actionnement ; ledit bouton comportant une première et deuxième parties de pression à ses deux extrémités, qui font saillie à l'extérieur à travers une paroi de ladite section de connexion dudit corps principal ; chacune desdites première et deuxième plaques conductrices comportant de premiers, deuxièmes et troisièmes points de contact ; lesdits deuxièmes points de contact étant respectivement reliés aux pôles positif et négatif de ladite unité d'alimentation ; ladite première plaque d'actionnement étant reliée à la fois audit moteur et à ladite quatrième plaque d'actionnement ; ladite deuxième plaque d'actionnement étant reliée à la fois audit moteur et à ladite troisième plaque d'actionnement ; de premiers fils reliant lesdites première et quatrième plaques d'actionnement ; de deuxièmes fils reliant lesdites deuxième et troisième plaques d'actionnement, et se croisant par ailleurs et se trouvant à l'écart desdits premiers fils reliant lesdites première et quatrième plaques d'actionnement ; quand lesdites parties de pression dudit bouton ne sont pas relâchées, ledit bouton étant normalement dans une positon d'arrêt alors que ladite première plaque se trouve à l'écart dudit premier point de contact de ladite première plaque conductrice, ladite deuxième plaque d'actionnement étant à l'écart dudit premier point de contact de ladite deuxième plaque conductrice, ladite troisième plaque d'actionnement étant à l'écart dudit troisième point de contact de ladite première plaque conductrice, et ladite quatrième plaque d'actionnement étant à l'écart dudit troisième point de contact de ladite deuxième plaque conductrice ; lesdites premières et deuxièmes plaques d'actionnement étant mobiles afin de toucher ledit premier point de contact de ladite première plaque conductrice et ledit premier point de contact de ladite deuxième plaque conductrice, par le biais d'une pression d'une desdites parties de pression dudit bouton respectivement ; lesdites troisième et quatrième plaques étant mobiles afin de toucher ledit troisième point de contact de ladite première plaque conductrice, et ledit troisième point de contact de ladite deuxième plaque conductrice respectivement, par le biais d'une pression d'une autre desdites parties de pression dudit bouton.

11. Moulin électrique pour assaisonnements selon la revendication 10, dans lequel ledit commutateur de commande comporte en outre une boule de verrouillage, qui comporte deux parties formant des ailes, et qui est située entre lesdites deux parties de pression dudit bouton ; ladite boule de verrouillage pouvant tourner jusqu'à une première position dans laquelle elle est perpendiculaire auxdites parties de pression dudit bouton ; ladite boule de verrouillage pouvant tourner jusqu'à une deuxième position, position dans laquelle elle est parallèle auxdites parties de pression dudit bouton ; ledit bouton ne pouvant pas être relâché lorsque ladite boule de verrouillage est tournée jusqu'à l'une desdites deux positions ; ledit bouton pouvant être relâché lorsque ladite boule de verrouillage est tourne jusqu'à une autre position que lesdites deux positions.

12. Moulin électrique pour assaisonnements selon la revendication 11, dans lequel ledit commutateur de commande comporte en outre un bloc de coulissement à proximité dudit bouton, ce bloc de coulissement servant à produire un mouvement de relâchement desdites plaques d'actionnement quand on appuie sur ledit bouton, et ledit corps principal comportant en outre un rail de guidage permettant de guider le mouvement dudit bloc de coulissement.

13. Moulin électrique pour assaisonnements selon la revendication 10, dans lequel ledit commutateur de commande comporte en outre un bloc de coulissement à proximité dudit bouton, ce bloc de coulissement servant à produire un mouvement de relâchement desdites plaques d'actionnement quand on appuie sur ledit bouton, et ledit corps principal comportant en outre un rail de guidage permettant de guider le mouvement dudit bloc de coulissement.
